# EUROPÄISCHE PATENTANMELDUNG

(11) **EP 3 872 007 A1**
(43) Veröffentlichungstag der Anmeldung: **01.09.2021**
(21) Anmeldenummer: 21158919.7
(22) Anmeldetag: 24.02.2021
(51) Int. Cl.: B65G 1/04, B61F 9/00, B66F 9/06, B66F 9/07

(54) **FÜHRUNGSROLLEN FÜR REGALBEDIENGERÄTE**

(30) Priorität: 26.02.2020 DE 102020202436
(71) Anmelder: MIAS Maschinenbau, Industrieanlagen & Service GmbH, 85386 Eching (DE)
(72) Erfinder: Hohnhorst, Antonio, 82140 Olching (DE); Hoole, Martin, 80796 München (DE); Motilva, Manuel, 82110 Germering (DE)
(74) Vertreter: Herzog, Markus

(57) **Zusammenfassung**

Die vorliegende Erfindung betrifft eine Führungsrollenanordnung (10) für ein Regalbediengerät, umfassend: einen Anbindungsabschnitt (12), welcher dazu eingerichtet ist, eine feste Anbringung an einer Traverse des Regalbediengeräts zu ermöglichen, einen Trägerabschnitt (18), welcher mittels einer Achse (16) schwenkbar an dem Anbindungsabschnitt (12) angelenkt ist, eine Führungsrolle (20), welche in einer drehbaren Weise von dem Trägerabschnitt (18) getragen ist, eine Abstützeinheit (22), welche fest mit der Traverse verbunden ist, und ein elastisches Element (38), welches derart direkt oder indirekt einerseits an dem Trägerabschnitt (18) und andererseits an einer Anlagefläche (36) der Abstützeinheit (22) anliegt, dass es den Trägerabschnitt (18) zu einer Drehung um die Achse (16) in Richtung der Traverse vorbelastet. Ferner betrifft die Erfindung ein Regalbediengerät (100), umfassend wenigstens eine derartige Führungsrollenanordnung, sowie ein Verfahren zum Montieren einer derartigen Führungsrollenanordnung.

## Beschreibung

Die vorliegende Erfindung betrifft eine Führungsrollenanordnung für ein Regalbediengerät, ein Regalbediengerät, umfassend wenigstens eine derartige Führungsrollenanordnung, sowie ein Verfahren zum Montieren einer derartigen Führungsrollenanordnung an einem Regalbediengerät.

Die Führung von Regalbediengeräten erfolgt üblicherweise durch Rollen, die an den beiden gegenüberliegenden Seiten einer Schiene angeordnet sind und dadurch für eine seitliche Führung und einen exakten Geradeauslauf des Geräts sorgen. Zu diesem Zweck werden die Rollen auf einen definierten Spalt zur Schiene eingestellt und in dieser Stellung starr verschraubt.

Dieser Spalt ist notwendig, um gegebenenfalls vorhandene Toleranzen in der Schiene auszugleichen, da die Rollen nach dem Einstellen und dem Verschrauben unbeweglich gegenüber funktionellen Komponenten des Regalbediengeräts angeordnet sind. Dieser Spalt führt jedoch andererseits dazu, dass das Regalbediengerät während seiner Fahrt zwischen den beiden Rollen hin- und herpendeln kann. Dies führt wiederum dazu, dass die Rollen abschnittweise den Kontakt zur Schiene verlieren können und bei einem erneuten Inkontakttreten mit der Schiene zunächst einmal auf die Fahrgeschwindigkeit des Regalbediengeräts beschleunigt werden müssen und in solchen Fällen kurzzeitig über die Schiene reiben.

Dieses Verhalten sorgt einerseits für einen hohen und ungleichmäßigen Verschleiß an den Rollen und andererseits für einen erhöhten Geräuschpegel im Betrieb des Regalbediengeräts. Außerdem weist die beschriebene Anordnung aus dem Stand der Technik neben dem eben angesprochenen nachteilhaften und schlecht vorhersehbaren Verschleißverhalten der Rollen eine nicht zufriedenstellende Wartungsfreundlichkeit auf, da eine schlechte Erreichbarkeit und Einstellbarkeit der Rollen vorliegen.

Es ist somit die Aufgabe der vorliegenden Erfindung, eine neuartige Führungsrollenanordnung für ein Regalbediengerät zu schaffen, welche die oben beschriebenen Nachteile des bekannten Stands der Technik ausräumt und sich durch einen geringeren Verschleiß sowie eine verbesserte Zugänglichkeit und Wartungsfreundlichkeit und hierdurch eine vereinfachte Montage auszeichnet.

Zu diesem Zweck umfasst die erfindungsgemäße Führungsrollenanordnung einen Anbindungsabschnitt, welcher dazu eingerichtet ist, eine feste Anbringung an einer Traverse des Regalbediengeräts zu ermöglichen, einen Trägerabschnitt, welcher mittels einer Achse schwenkbar an dem Anbindungsabschnitt angelenkt ist, eine Führungsrolle, welche in einer drehbaren Weise von dem Trägerabschnitt getragen ist, eine Abstützeinheit, welche fest mit der Traverse verbunden ist, und ein elastisches Element, welches derart direkt oder indirekt einerseits an dem Trägerabschnitt und andererseits an einer Anlagefläche der Abstützeinheit anliegt, dass es den Trägerabschnitt zu einer Drehung um die Achse in Richtung der Traverse vorbelastet.

Indem auf diese Weise die Rolle durch die Wirkung des elastischen Elements in Richtung der Schiene gedrückt wird, liegt die Rolle während einer Bewegung des Regalbediengeräts stets an dieser an, sodass ein gleichmäßiger Lauf der Rolle und damit verbunden ein geringerer Verschleiß und ein deutlich leiserer Betrieb erzielt werden können. Indem ferner durch das elastische Element ein vorgegebener Federweg geschaffen werden kann, können Stöße durch kleinere Unebenheiten in der Schiene abgefangen werden. Weiterhin kann durch das schwenkbare Anlenken des Trägerabschnitts an dem Anbringungsabschnitt eine verbesserte Zugänglichkeit und eine vereinfachte Montage der Führungsrollenanordnung erzielt werden, wie insbesondere aus dem unten beschriebenen erfindungsgemäßen Verfahren zum Montieren einer derartigen Führungsrollenanordnung deutlich werden wird.

In einer bevorzugten Ausführungsform kann zum optimalen Aufnehmen der Führungsrolle an dem Trägerabschnitt dieser mit zwei Teilen ausgebildet sein, welche sich jeweils an einer Seite der Führungsrolle bezüglich ihrer Drehachse erstrecken. Hierbei kann eine einzelne durchgehende Achse durch die Führungsrolle und die beiden Teile des Trägerabschnitts vorgesehen sein oder auch jeweils eine unabhängige Lagerung der Führungsrolle an den beiden Abschnitten.

Ferner kann in einer besonders einfachen Ausführungsform das elastische Element durch eine Spiralfeder gebildet sein, es könnten alternativ selbstverständlich aber auch anders aufgebaute elastische Elemente vorgesehen sein, wie zum Beispiel andere Typen von Federn oder ein geeignetes elastisch verformbares Material, das bei einer Verformung eine Rückstellkraft ausüben kann.

Um einen geeigneten Schutz des elastischen Elements vor Verschmutzung und dergleichen zu gewährleisten, kann die Abstützeinheit ferner einen Hülsenabschnitt umfassen, welcher sich von der Anlagefläche erstreckt und das elastische Element wenigstens abschnittsweise aufnimmt. Dieser Hülsenabschnitt kann ferner gegebenenfalls als Anschlagselement dienen, um den Federweg des elastischen Elements hart zu begrenzen, sodass der durch das elastische Element bereitgestellte Federweg sich über eine Distanz erstreckt, bis der Hülsenabschnitt mit einem entsprechenden Gegenabschnitt des Trägerabschnitts in Kontakt kommt.

Für eine weiter vereinfachte Montage und für einen Schutz vor einem Verlieren davon kann das elastische Element ferner fest an der Abstützeinheit angebracht sein.

Um eine Einstellung der Abstützeinheit gegenüber dem Trägerabschnitt zu ermöglichen und hierdurch einerseits die Federvorspannung und gegebenenfalls andererseits den oben beschriebenen Federweg zwischen Hülsenabschnitt und Trägerabschnitt einstellen zu können, kann die Abstützeinheit einen Hauptkörper, welcher fest mit der Traverse verbunden ist, und ein gegenüber dem Hauptkörper verlagerbares Einstellelement umfassen, wobei die Anlagefläche dem Einstellelement zugeordnet und dementsprechend gemeinsam mit diesem verlagerbar ist.

In dieser Ausführungsform kann der Hauptkörper insbesondere eine Gewindestange umfassen und das Einstellelement ein Innengewinde sowie ggf. eine darauf aufschraubbare Kontermutter umfassen. Somit kann durch ein Aufschrauben des Einstellelements bis zu einer vorgegebenen Position eine Einstellung davon und damit der Anlagefläche und ggf. des dieser zugeordneten Hülsenabschnitts vorgenommen werden, wobei die Kontermutter zur Arretierung dieser Anordnung dienen kann.

Ferner betrifft die vorliegende Erfindung ein Regalbediengerät, umfassend wenigstens eine erfindungsgemäße Führungsrollenanordnung, vorzugsweise eine Mehrzahl derartiger Führungsrollenanordnungen, welche weiter vorzugsweise paarweise derart angeordnet sind, dass die jeweiligen Führungsrollen einander gegenüberliegend an einer Schiene geführt sind.

Alternativ könnte selbstverständlich gegenüber einer erfindungsgemäßen Führungsrolleneinheit mit ihren oben beschriebenen Dämpfungseigenschaften auch eine starr montierte Führungsrolle vorgesehen sein, hierdurch würden die erfindungsgemäßen Vorteile einer vereinfachten Montage und einer erhöhten Laufruhe sowie eines geringeren Verschleißes jedoch unter Umständen nicht in gleichem Maße erzielt werden wie beim Vorsehen jeweiliger Paare von erfindungsgemäßen Führungsrollenanordnungen. In jedem Fall wäre weiterhin denkbar, die beiden Führungsrollen hinsichtlich ihrer Rotation mechanisch zu koppeln, sodass auch eine momentan nicht anliegende Rolle in Bewegung gehalten würde. Dies könnte beispielsweise über einen Zahnriemen geschehen, durch welchen die Bewegung der einen Rolle auch auf die andere übertragen werden könnte. Dieses Prinzip ließe sich unter Umständen auch in den oben beschriebenen Führungsrolleneinheiten mit starr angebrachten Führungsrollen aus dem Stand der Technik realisieren, sodass, wenn eine der beiden Führungsrollen aus dem Kontakt mit der Schiene gerät und kurz darauf erneut mit ihr in Kontakt tritt, diese bereits in Bewegung ist und nicht plötzlich beschleunigt werden muss. Auch in einer solchen Ausführungsform eines Regalbediengeräts würde jedoch der erfindungsgemäße Vorteil der vereinfachten Montage nicht im selben Umfang erzielt werden und es wären sogar zusätzliche Komponenten notwendig.

Zuletzt betrifft die vorliegende Erfindung ein Verfahren zum Montieren einer erfindungsgemäßen Führungsrollenanordnung an einem Regalbediengerät, umfassend die Schritte eines Anbringens des Anbindungsabschnitts an einer Traverse des Regalbediengeräts und eines Anbringens der Abstützeinheit an der Traverse zusammen mit dem elastischen Element derart, dass das elastische Element direkt oder indirekt einerseits an dem Trägerabschnitt und andererseits an einer Anlagefläche der Abstützeinheit zur Anlage kommt.

Falls die Führungsrollenanordnung von der oben beschriebenen Ausführungsform ist, in welcher die Abstützeinheit einen Hauptkörper und ein gegenüber dem Hauptkörper verlagerbares Einstellelement umfasst, kann ferner ein Schritt eines Verlagerns des Einstellelements in eine Arbeitsposition vorgesehen werden, wobei vorzugsweise in der Arbeitsposition ein geringer Abstand zwischen der Abstützeinheit, insbesondere der Hülse, und dem Trägerabschnitt bezüglich der Schwenkrichtung des Trägerabschnitts um die Achse belassen wird. Dieser Montageschritt führt dementsprechend zu einer Anpassung der oben ebenfalls schon beschriebenen harten Begrenzung des Federwegs. Beispielsweise könnte dieser geringe Abstand vergleichbar zu demjenigen Abstand gewählt werden, welcher in der oben beschriebenen Weise in Führungsrollenanordnungen aus dem Stand der Technik dem Spalt zur Aufnahme von Toleranzen der Schiene entspricht.

Weitere Merkmale und Vorteile der vorliegenden Erfindung werden aus der nachfolgenden Beschreibung einer Ausführungsform davon deutlich, wenn diese zusammen mit den beiliegenden Figuren betrachtet wird. Diese zeigen im Einzelnen:
- Fig. 1: eine erfindungsgemäße Führungsrollenanordnung in einer schematischen Querschnittsdarstellung; und
- Fig. 2: zwei der Führungsrollenanordnungen aus Figur 1 in einem an einer Traverse eines Regalbediengeräts montierten Zustand in einer isometrischen Ansicht.

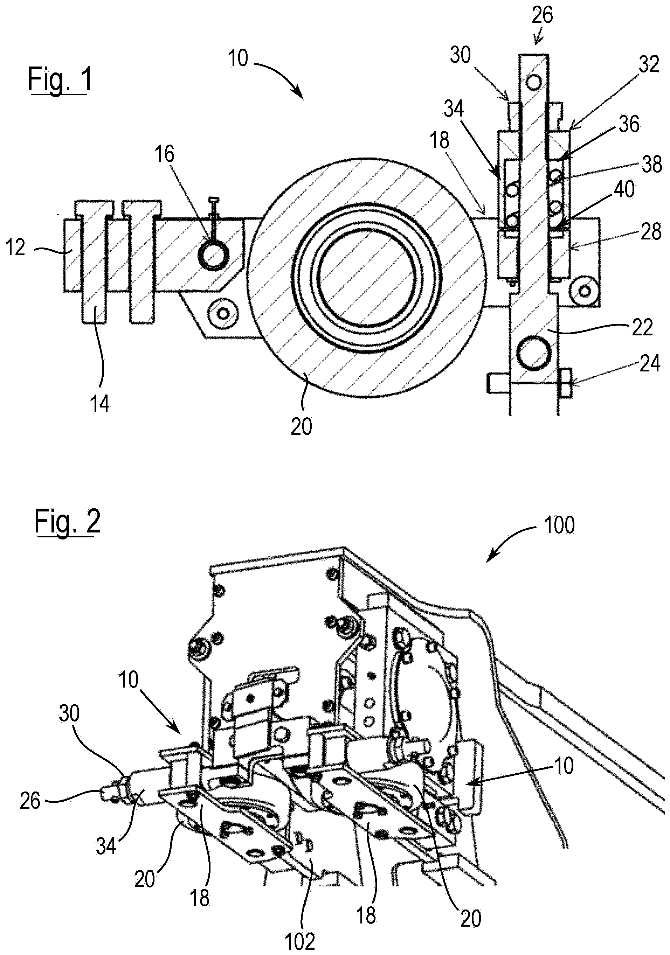

In Figur 1 ist eine erfindungsgemäße Führungsrollenanordnung für ein Regalbediengerät in einer schematischen Querschnittsdarstellung gezeigt und ganz allgemein mit dem Bezugszeichen 10 bezeichnet. Die Anordnung 10 umfasst zunächst einen Anbindungsabschnitt 12, welcher mittels Befestigungselementen 14, wie beispielsweise Nieten oder Schrauben, an einer in Figur 1 nicht gezeigten Traverse eines Regalbediengeräts anbringbar ist. An dem Anbringungsabschnitt 12 ist über eine Achse 16 schwenkbar ein Trägerabschnitt 18 angelenkt, welcher wiederum in einer drehbaren Weise eine Führungsrolle 20 trägt.

Da in der Figur 1 gezeigten Darstellung die Schnittebene durch die Führungsrolle 20 hindurch verläuft und gemäß dem montierten Zustand aus Figur 2 von oben her auf die Anordnung 10 geblickt wird, ist lediglich ein unterhalb der Führungsrolle 20 liegender Teil des Trägerabschnitts 18 gezeigt, in der dargestellten Ausführungsform ist jedoch noch ein in Figur 1 zunächst nicht dargestellter zweiter Teil vorgesehen, der symmetrisch bezüglich der Schnittebene auf der anderen, d.h. oberen Seite der Führungsrolle 20 parallel zu dem dargestellten Teil verläuft.

Ein weiterer Befestigungspunkt der Führungsrollenanordnung 10 an der in Figur 1 nicht dargestellten Traverse des Regalbediengeräts ist einer Abstützeinheit 22 zugeordnet, wo ebenfalls ein Verbindungselement 24, wie beispielsweise eine Schraube oder ein Niet, die angesprochene Verbindung herstellt. Die Abstützeinheit 22 umfasst wiederum einen Hauptkörper 26, welcher in Form einer Gewindestange ausgebildet ist und sich zwischen den beiden Teilen des Trägerabschnitts durch einen diesem zugeordneten Andruckklotz 28 hindurch erstreckt.

Auf die Gewindestange 26 aufgeschraubt ist ferner ein Einstellelement 32 mit einem Innengewinde vorgesehen, welches zudem durch eine Kontermutter 30 arretiert ist. Das Einstellelement 32 umfasst ferner einerseits einen Hülsenabschnitt 34, welcher sich im Wesentlichen konzentrisch zu der Gewindestange 26 erstreckt, und andererseits eine Anlagefläche 36, welche eine erste Anlage für eine innerhalb des Hülsenabschnitts 34 aufgenommene Spiralfeder 38 bildet. An ihrem anderen Ende ist die Spiralfeder 38 an dem bereits angesprochenen Andruckklotz 28 abgestützt und sorgt dementsprechend für eine Vorbelastung des Trägerabschnitts 18 hinsichtlich einer Drehung um die Achse 16 in Richtung nach unten in Figur 1.

Zuletzt sei auf den Abstand 40 hingewiesen, welcher durch die vorgenommene Einstellung des Einstellelements 32 zwischen dem in Figur 1 unteren Ende des Hülsenabschnitts 34 und dem Andruckklotz 28 vorgesehen ist. Dieser Abstand 40 begrenzt den möglichen Federweg, der durch die Spiralfeder 38 bereitgestellt wird, indem nach Überschreiten davon bei einer Rotation des Trägerabschnitts 18 um die Achse 16 in Richtung nach oben in Figur 1 der Hülsenabschnitt 34 gegen den Andruckklotz 28 zum Anschlag kommt und somit den Federweg hart begrenzt.

Durch das Vorsehen des Federelements 38 wird im Betrieb der Anordnung 10 ein konstantes Anliegen der Rolle 20 gegen eine nicht dargestellte Schiene zu allen Zeiten sichergestellt, wobei das Ausfedern der Rolle 20 zusammen mit ihrem Trägerabschnitt 18 beim Überlaufen von Unebenheiten auf der Schiene durch einen Anschlag des Andruckklotzes 28 gegen den Hülsenabschnitt 34 begrenzt wird.

In Figur 2 sind nun zwei der in Figur 1 dargestellten Führungsrollenanordnungen 10 in einem an einer Traverse 102 eines Regalbediengeräts 100 montieren Zustand gezeigt. Hierbei liegen sich die beiden Führungsrollenanordnungen 10 derart gegenüber, dass zwischen ihren beiden Rollen 20 eine Schiene aufgenommen sein kann, mit welcher die beiden Rollen 20 von beiden gegenüberliegenden Seiten in Kontakt stehen. Ferner ist aus Figur 2 noch die zweiteilige Struktur der beiden Trägerabschnitte 18 zu erkennen, ebenso wie die beiden hervorstehenden Gewindestangen 26, an welchen die Hülsenabschnitte 34 montiert sind, innerhalb welcher die Spiralfedern 38 aufgenommen sind, die für den Anpressdruck der beiden Rollen 20 an die Schiene sorgen.

## Patentansprüche

1. Führungsrollenanordnung (10) für ein Regalbediengerät (100), umfassend:
- einen Anbindungsabschnitt (12), welcher dazu eingerichtet ist, eine feste Anbringung an einer Traverse (102) des Regalbediengeräts (100) zu ermöglichen;
- einen Trägerabschnitt (18), welcher mittels einer Achse (16) schwenkbar an dem Anbindungsabschnitt (12) angelenkt ist;
- eine Führungsrolle (20), welche in einer drehbaren Weise von dem Trägerabschnitt (18) getragen ist;
- eine Abstützeinheit (22), welche fest mit der Traverse (102) verbunden ist; und
- ein elastisches Element (38), welches derart direkt oder indirekt einerseits an dem Trägerabschnitt (18) und andererseits an einer Anlagefläche (36) der Abstützeinheit (22) anliegt, dass es den Trägerabschnitt (18) zu einer Drehung um die Achse (16) in Richtung der Traverse (102) vorbelastet.

2. Führungsrollenanordnung (10) nach Anspruch 1,
wobei der Trägerabschnitt (18) mit zwei Teilen ausgebildet ist, welche sich jeweils an einer Seite der Führungsrolle (20) bezüglich ihrer Drehachse erstrecken.

3. Führungsrollenanordnung (10) nach Anspruch 1 oder 2, wobei das elastische Element (38) durch eine Spiralfeder (38) gebildet ist.

4. Führungsrollenanordnung (10) nach einem der vorhergehenden Ansprüche,
wobei die Abstützeinheit (22) einen Hülsenabschnitt (34) umfasst, welche sich von der Anlagefläche (36) erstreckt und das elastische Element (38) wenigstens abschnittweise aufnimmt.

5. Führungsrollenanordnung (10) nach einem der vorhergehenden Ansprüche,
wobei das elastische Element (38) fest an der Abstützeinheit (22) angebracht ist.

6. Führungsrollenanordnung (10) nach einem der vorhergehenden Ansprüche,
wobei die Abstützeinheit (22) einen Hauptkörper (26), welcher fest mit der Traverse verbunden ist, und ein gegenüber dem Hauptkörper (26) verlagerbares Einstellelement (32) umfasst, wobei die Anlagefläche (36) dem Einstellelement (32) zugeordnet ist.

7. Führungsrollenanordnung (10) nach Anspruch 6,
wobei der Hauptkörper (26) eine Gewindestange (26) umfasst und das Einstellelement (32) ein Innengewinde sowie ggf. eine darauf aufschraubbare Kontermutter (30) umfasst.

8. Regalbediengerät (100), umfassend wenigstens eine Führungsrollenanordnung (10) nach einem der vorhergehenden Ansprüche, vorzugsweise eine Mehrzahl derartiger Führungsrollenanordnungen (10), welche weiter vorzugsweise paarweise derart angeordnet sind, dass die jeweiligen Führungsrollen (20) einander gegenüberliegend an einer Schiene geführt sind.

9. Regalbediengerät (100) nach Anspruch 8,
wobei die beiden Führungsrollen (20) hinsichtlich ihrer Rotation mechanisch gekoppelt sind.

10. Verfahren zum Montieren einer Führungsrollenanordnung (10) nach einem der Ansprüche 1 bis 7 an einem Regalbediengerät (100), umfassend die folgenden Schritte:
- Anbringen des Anbindungsabschnitts (12) an einer Traverse (102) des Regalbediengeräts (100); und
- Anbringen der Abstützeinheit (22) an der Traverse (102) zusammen mit dem elastischen Element (38) derart, dass das elastische Element (38) direkt oder indirekt einerseits an dem Trägerabschnitt (18) und andererseits an einer Anlagefläche (36) der Abstützeinheit (22) zur Anlage kommt.

11. Verfahren nach Anspruch 10, wobei die Führungsrollenanordnung (10) nach einem der Ansprüche 6 und 7 ist,
ferner umfassend den Schritt eines Verlagerns des Einstellelements (32) in eine Arbeitsposition, wobei vorzugsweise in der Arbeitsposition ein geringer Abstand zwischen der Abstützeinheit (22), insbesondere dem Hülsenabschnitt (34), und dem Trägerabschnitt (18) bezüglich der Schwenkrichtung des Trägerabschnitts (18) um die Achse (16) belassen wird.
